# EUROPÄISCHE PATENTSCHRIFT

(11) **EP 2 920 796 B1**
(45) Veröffentlichungstag und Bekanntmachung des Hinweises auf die Patenterteilung: **29.05.2019**
(21) Anmeldenummer: 13783326.5
(22) Anmeldetag: 24.10.2013
(51) Int. Cl.: H01F 1/057, H01F 1/055, H01F 41/02

(54) **VERFAHREN ZUR HERSTELLUNG EINES PERMANENTMAGNETEN SOWIE PERMANENTMAGNET**
PROCESS FOR MANUFACTURING A PERMANENT MAGNET AS WELL AS PERMANENT MAGNET
PROCÉDÉ DE PRODUCTION D'UN AIMANT PERMANENT AINSI QU'AIMANT PERMANENT

(30) Priorität: 14.11.2012 DE 102012022223; 16.03.2013 DE 102013004985
(43) Veröffentlichungstag der Anmeldung: 23.09.2015
(73) Patentinhaber: Volkswagen Aktiengesellschaft, 38440 Wolfsburg (DE)
(72) Erfinder: ZLATKOV, Branislav, A-2700 Wr. Neustadt (AT)
(74) Vertreter: Gulde & Partner
(86) Internationale Anmeldenummer: PCT/EP2013/072325
(87) Internationale Veröffentlichungsnummer: WO 2014/075890

(56) Entgegenhaltungen:
- EP-A1- 0 945 878
- EP-A1- 2 477 199
- EP-A1- 2 508 279
- EP-A2- 0 255 816

## Beschreibung

Die Erfindung betrifft ein Verfahren zur Herstellung eines Permanentmagneten sowie einen mit dem Verfahren herstellbaren Permanentmagneten.

Die Nachfrage an leistungsfähigen Permanentmagneten, die beispielsweise in elektrischen Maschinen eingesetzt werden, steigt beständig. Insbesondere werden Permanentmagnete in Elektromotoren für die Traktion von Kraftfahrzeugen eingesetzt, die im Zuge zunehmender Elektromobilität an Interesse gewinnen. Als magnetische beziehungsweise magnetisierbare Legierungen mit hohen Koerzitivkräften kommen hauptsächlich Seltenerdlegierungen des Typs SE-TM-B oder SE-TM zum Einsatz, wobei SE ein Element der Seltenen Erden ist, TM ein Übergangsmetall der Eisengruppe (Fe, Co, Ni) und B Bor ist. Bei der Fertigung der Magnete aus diesen Materialien werden grundsätzlich möglichst kleine Korngrößen im fertigen Magneten angestrebt, nämlich in der Dimension magnetischer Domänen (< 1 µm, idealerweise 200 bis 400 nm), sodass der kompakte Magnet sich im Idealfall aus Eindomänenkristalliten zusammensetzt, wodurch besonders hohe Magnetfeldstärken erzielt werden.

Typische Herstellungsverfahren umfassen die Prozessstufen Pulverisierung des magnetischen Ausgangsmaterials, Pressen des Pulvers zu einem Grünkörper mit oder ohne externem Magnetfeld unter Ausformung einer gewünschten Gestalt, Sintern des Grünkörpers zur weiteren Verdichtung (Hochtemperaturbehandlung), optional Tempern (Wärme- oder Niedertemperaturbehandlung) zum Spannungsabbau und zur Gefügestabilisierung im Magnetkörper, maschinelle Nachbearbeitung (Schneiden, Schleifen) und Magnetisierung in einem Magnetfeld. Teilweise werden verschiedene Prozessstufen auch miteinander kombiniert sowie die Reihenfolge variiert. Beispielsweise ist das Heißpressverfahren bekannt, bei welchem das Pressen unter einer Temperatur erfolgt, die zu einer mechanischen Verdichtung des Magnetmaterials führt und somit einen separaten Sinterprozess erübrigt. Zudem wird das Pressen häufig in einem externen Magnetfeld vorgenommen, wobei magnetisch anisotrope Magnete entstehen, sodass die nachträgliche Magnetisierung entfallen kann. Bei Heißpressen wird kein Magnetfeld während des Pressens gebraucht. Vielmehr werden die Teile werden nach dem Pressen magnetisiert.

Bei den im Stand der Technik zum Einsatz kommenden Sinterprozessen wird das pulverisierte Magnetmaterial hohen Temperaturen, knapp unterhalb der Schmelztemperatur des Magnetmaterials ausgesetzt. Bei den genannten Seltenerdlegierungen wird typischerweise eine Sintertemperatur zwischen 1.000 und 1.150 °C bei einer Sinterzeit von 1-3 h angewandt (im Falle gleichzeitiger Druckanwendung entsprechend niedrigere Temperaturen). Dabei kommt es zu einer Verdichtung und zu einer mechanischer Verbindung der Partikel. Ferner findet ein partielles Aufschmelzen der Partikeloberflächen statt, sodass diese sich an ihren Korngrenzen auch stoffschlüssig miteinander verbinden (Sintern in der flüssigen Phase). Unerwünschte Begleiterscheinung des Sinterns ist Kristallwachstum, was selbst bei Verwendung von sehr feinteiligen Pulvern mit Partikeldurchmessern im angestrebten Bereich < 1 µm zu Korngrößen in der Größenordnung von 3 bis 10 µm führt. Diese Korngrößen beeinträchtigen jedoch die magnetische Leistung des Magneten.

Ein weiteres Problem der genannten Magnetmaterialien ist, dass die Legierungen insbesondere in Pulverform sehr pyrophor sind, d. h. sich in Gegenwart von Sauerstoff und Feuchtigkeit leicht entzünden. Dies erfordert besondere Schutzmaßnahmen während der Herstellung, beispielsweise die Verarbeitung unter inerten Schutzgasen, sowie eine nachträgliche Beschichtung oder Einbettung des Magneten. Problematisch ist ferner die Korrosionsneigung der Magnetlegierungen, die ebenfalls zu einem Nachlassen der magnetischen Leistung führt.

Um die Temperaturfestigkeit des Magneten zu erhöhen, ist im Stand der Technik ein weiterer Verfahrensschritt als "Grain Boundary Diffusion Process" (GBDP) bekannt. Hierbei wird durch Diffusion ein weiterer Stoff in den Magneten eingebracht, z. B. Dysprosium, Terbium oder Kupfer. Dieser Stoff reichert sich zwischen den Kristallgrenzen an und erhöht die Strukturfestigkeit des Kristallgitters der Körner und somit die Temperaturfestigkeit. Nachteilig am GBDP ist, dass der Verfahrensschritt aufwändig und zeitintensiv ist. Weiterhin ist der Diffusionsprozess auf eine Materialdicke im Bereich unterhalb von 5 mm begrenzt und es entsteht ein problematischer Konzentrationsgradient des eingesetzten Stoffs. Eine Anwendung auf wesentlich dickere Magnete kann daher eine inhomogene magnetische Feldstärke des Magneten zur Folge haben. Weiterhin müssen die so hergestellten Magnete vor Korrosion geschützt werden. Hierfür können Beschichtungen aus Nickel, Epoxidharz u. a. verwendet werden.

EP 1 744 328 B1 beschreibt ein Herstellungsverfahren für einen Magneten, wobei ein Pulver eines Magnetmaterials des Typs SE-Fe-B hergestellt wird und dieses zunächst mit einem Seltenerdoxidpulver und dann mit einem Glaspulver aus einer Polyvinylalkohol-Lösung imprägniert wird, so dass beschichtete Magnetpartikel erhalten werden. Diese Partikel werden nach ihrer Trocknung zunächst bei einem erhöhten Druck (49 MPa) im Magnetfeld zu Grünkörpern geformt und diese in einem Heißpressverfahren zu Magneten heißverdichtet oder heißgeschmiedet (294 MPa, 730 °C). Es resultiert eine Struktur, in der die Magnetpartikel in einer Matrix eingebettet sind, die eine Glasphase und darin verteilte Partikel des Seltenerdoxids aufweist. An den Grenzflächen zwischen den Magnetpartikeln und der Glasphase bildet sich eine Schicht aus, die aus einer Legierungsphase des Magnetmaterials und des Seltenerdelements und darin verteilten Partikeln des Seltenerdoxids besteht (s. Fig. 1 der EP 1 744 328 B1). Es wird ferner eine Variante des oben beschriebenen Verfahrens offenbart, bei der das Pulver des Magnetmaterials erst mit einem Seltenerdoxid in einem Sputter-Prozess beschichtet wird. Anschließend erfolgt wiederum die zuvor beschriebene Nass-Imprägnierung mit dem Seltenerdoxidpulver und dem Glaspulver und die nachfolgende Trocknung, Formung und Heißverpressung. In diesem Fall entsteht eine Struktur, die sich von der vorherigen durch eine weitere Schicht unterscheidet, die zwischen der Legierungsschicht und den Magnetpartikeln angeordnet ist und aus dem Seltenerdoxid besteht (s. Fig. 2 der EP 1 744 328 B1).

JP 01272101 A (Abstract) offenbart die Behandlung der Oberfläche eines Pulvers eines Magnetmaterials des Typs SE-TM-B mit einem Alkalisilikat, z. B. so genanntes Wasserglas (Na₂O/SiO₂), Kaliumsilikat oder Lithiumsilikat.

Gemäß JP 03295205 A wird eine Seltenerdlegierung pulverisiert und das Pulver in einer wässrigen Lösung mit Wasserglas (Na₂O/SiO₂) imprägniert. Die somit mit Wasserglas beschichteten Pulverpartikel werden getrocknet, ausgeformt und heißverpresst.

Aus EP 0 255 816 A2 ist ein Herstellungsverfahren für Magnete auf Basis einer SE-Fe-B-Legierung bekannt, bei dem das Ausgangsmaterial zunächst zerkleinert und zu einem Pulver verarbeitet wird. Das Pulver wird dann einer Wärmebehandlung bei 300 bis 1000 °C unterzogen und anschließend mit einer keramischen oder metallischen Korrosionsschutzschicht beschichtet, wobei die metallische Schicht auf elektrolytischem Weg erfolgt. Die so hergestellten beschichteten Partikel werden mit oder ohne einem Magnetfeld zu einem Magneten verpresst, wobei dem zu verpressenden Pulver zur Verbesserung der Festigkeit Zusätze eines Metall-, Keramik- oder Kunststoffpulvers zugegeben werden können.

Nach US 2011/0037548 A1 wird ein Magnetmaterial (z. B. Nd-Fe-B) in einem Nassmahlverfahren unter Erhalt von Partikelgrößen < 3 µm pulverisiert und mit einer organischen Verbindung eines hochschmelzenden Metalls oder einem Präkursor einer hochschmelzenden Keramik zu einer Aufschlämmung verarbeitet, wobei die Magnetpartikel mit der organischen Metallverbindung bzw. dem Keramik-Präkursor beschichtet werden. Als hochschmelzendes Metall wird Ta, Mo, W und Nb genannt und als Keramik BN und AIN. Nach Zusatz eines thermo- oder duroplastischen Polymerbindemittels wird die Aufschlämmung in eine gewünschte Form gegossen und bei Temperaturen zwischen 1.100 und 1.150 °C gesintert. Dabei bildet die organische Metallverbindung bzw. der Keramik-Präkursor eine die Magnetpartikel umgebende Schicht aus, welche das Kristallwachstum während des Sinterns verhindern soll. Von der vorstehenden Methode unterscheidet sich das in US 2011/0267160 A1 offenbarte Verfahren im Wesentlichen dadurch, dass anstelle eines Bindemittels die organische Metallverbindung bzw. der Keramik-Präkursor in gelöster Form in einem korrosionshemmenden, mineralischen oder synthetischen Öl eingesetzt wird.

EP0945878 A1 offenbart Nd₂Fe₁₄B-Pulverpartikel mit einem mittleren Partikeldurchmesser von 3 bis 400 µm eingebettet in einem Matrix aus ausgehärtetem Harz.

EP2508279 A1 offenbart magnetische Partikel mit einem mittleren Durchmesser im Bereich von 10 µm bis 500 µm, die eine Beschichtungsschicht aus Harzen, Keramiken, Metallen oder glasartigen Materialien aufweisen.

EP2477199 A1 offenbart magnetische Pulverpartikel mit einer ferromagnetischen Beschichtung aus einer Seltenerd-Legierung.

Ausgehend vom Stand der Technik liegt der vorliegenden Erfindung die Aufgabe zugrunde, ein Verfahren zur Herstellung eines Permanentmagneten bereitzustellen, mittels welchem Magnete einfacher und kostengünstiger hergestellt werden können, die temperatur- und korrosionsbeständig sind und eine hohe magnetische Leistung besitzen. Weiterhin besteht die Aufgabe in der Bereitstellung eines verbesserten temperatur- und korrosionsbeständigen Magneten.

Diese Aufgaben werden gelöst durch ein Herstellungsverfahren zur Herstellung eines Permanentmagneten gemäß Anspruch 1, ein entsprechender mit dem Verfahren herstellbarer Permanentmagnet gemäß Anspruch 8, sowie eine elektrische Maschine gemäß Anspruch 9, die einen solchen umfasst, mit den Merkmalen der unabhängigen Ansprüche.

Das erfindungsgemäße Verfahren zur Herstellung eines Permanentmagneten umfasst die Schritte:
(a) Bereitstellen eines Pulvers eines magnetischen Materials,
(b) Beschichten der Pulverpartikel mit einer Schicht eines diamagnetischen oder paramagnetischen Beschichtungsmaterials,
(c) Pressen der beschichteten Partikel zu einem Pressling,
(d) Sintern des Beschichtungsmaterials bei einer Temperatur, die kleiner als eine zur Sinterung (und Erschmelzung) des magnetischen Materials geeignete Temperatur ist, unter Überführung des Beschichtungsmaterials in eine Matrix eines diamagnetischen oder paramagnetischen Materials, welche die Partikel des magnetischen Materials einbettet, und
(e) Magnetisieren des magnetischen Materials in einem externen Magnetfeld,
wobei die Schritte (c), (d) und (e) in beliebiger Reihenfolge nacheinander oder in beliebigen Kombinationen zeitgleich durchgeführt werden.

Das erfindungsgemäße Verfahren zeichnet sich insbesondere dadurch aus, dass die Sinterung des Beschichtungsmaterials bei einer Temperatur durchgeführt wird, die kleiner als eine Sintertemperatur des magnetischen Materials (nachfolgend auch als Magnetmaterial bezeichnet) ist. Mit anderen Worten, wird der Sinterschritt (d) des Verfahrens unter Bedingungen durchgeführt, bei denen keine Sinterung des Magnetmaterials erfolgt. Insbesondere wird in Schritt (d) die Sinterung bei einer Temperatur durchgeführt, die höchstens einer Transformations- oder Schmelztemperatur des Beschichtungsmaterials (je nachdem, ob dieses ein amorphes oder kristallines Material ist) entspricht. Demgemäß erfolgt die Sinterung in Schritt (d) ausschließlich unter Aufschmelzung des Beschichtungsmaterials und nicht unter Sinterung des Magnetmaterials der Magnetkerne. Vorzugsweise wird das gesamte Verfahren unter Bedingungen durchgeführt, bei denen keine Sinterung des Magnetmaterials erfolgt. Dies bedeutet, dass in keinem Verfahrensschritt Bedingungen (insbesondere Temperatur und Druck) angewendet werden, welche zur Sinterung des Magnetmaterials führen. Dabei ist grundsätzlich zu berücksichtigen, dass die Transformations- und Schmelztemperaturen der Materialien druckabhängig sind und somit die Sintertemperatur unter Berücksichtigung des Drucks zu wählen ist. Wird somit in einem Verfahrensschritt gleichzeitig ein erhöhter Druck und eine erhöhte Temperatur angewandt, beispielsweise durch eine Kombination der Schritte (c) und (d), so ist die Prozesstemperatur anders als beim druckfreien Sintern zu wählen. In jedem Fall sind die Bedingungen so zu wählen, dass sie höchstens zur Sinterung des Beschichtungsmaterials, nicht jedoch des Magnetmaterials führen.

Durch die erfindungsgemäße Prozessführung unter Vermeidung der Sinterung des Magnetmaterials, insbesondere im Sinterschritt (d), wird ein unerwünschtes Kristallwachstum der Magnetpartikel, erreicht. Dieser Effekt wird noch dadurch vergrößert, dass die Pulverpartikel eine Beschichtung aufweisen, welche das Zusammenwachsen benachbarter Magnetpartikel während des Pressens und/oder des Sinterns verhindert. Im Ergebnis entspricht der Durchmesser der magnetischen Kerne des fertigen Magneten im Wesentlichen dem Durchmesser der eingesetzten Pulverpartikel, der bei ≤ 3 µm, vorzugsweise bei ≤ 1 µm liegt, insbesondere bei 200 bis 400 nm. Erfindungsgemäß wird somit ein Magnet erhalten, der im Wesentlichen aus Eindomänenteilchen oder Eindomänenkristalliten zusammengesetzt ist und somit eine höhere Koerzitivfeldstärke und verbesserte Temperaturbeständigkeit aufweist. Gleichzeitig führen die geringen Partikelgrößen zu einer dichteren Kristallpackung und somit zu einer höheren mechanischen Festigkeit (Härte).

Durch die Beschichtung der magnetischen Partikel werden zusätzliche positive Effekte erzielt. So wird die Korrosionsbeständigkeit des Magnetmaterials erhöht. Im gleichen Zuge führt die Beschichtung der Magnetpartikel zu einer Passivierung der Partikeloberflächen. Hierdurch wird die Gefahr einer Selbstentzündung bei Kontakt mit Luft des sehr pyrophoren Magnetmaterials, welche insbesondere bei der Pulverhandhabung gegeben ist, überwunden. Auf diese Weise wird die Durchführung des Verfahrens wesentlich vereinfacht, beispielsweise muss nach erfolgter Beschichtung nicht unter einer Inertgasatmosphäre gearbeitet werden. Ferner führt die dielektrische Isolationswirkung der para- oder diamagnetischen Matrix in Verbindung mit der geringen Partikelgröße zu einer Reduktion der im Magneten entstehenden Wirbelströme. Dies führt wiederum zu einer erhöhten Magnetfeldstärke sowie zu einer Vermeidung unerwünschter Erwärmung des Magneten.

Das Verfahren zeichnet sich darüber hinaus durch eine hohe Flexibilität hinsichtlich der einzusetzenden Materialien sowohl des magnetischen Materials als auch des Beschichtungs- bzw. Matrixmaterials aus. Zudem ist das Verfahren schneller und kostengünstiger durchführbar, als das einleitend beschriebene GBDP-Verfahren.

Es versteht sich, dass die konkrete, in Schritt (d) gewählte Temperatur von dem Beschichtungsmaterial abhängt, insbesondere seiner Glasübergangs- (Transformations-) bzw. Schmelztemperatur. Beispielsweise liegt die Transformationstemperatur vieler Gläser, die im Rahmen der vorliegenden Erfindung Beispiele bevorzugter Matrixmaterialien darstellen (s.u.), im Bereich bis 900 °C. In diesem Fall beträgt ein bevorzugter Temperaturbereich für die Sinterung 400 bis 800 °C, insbesondere 550 bis 650 °C, wenn unter Normaldruck gearbeitet wird. Insbesondere liegt die Sintertemperatur mindestens 50 °C, vorzugsweise mindestens 100 °C unterhalb der Transformations- bzw. Schmelztemperatur des Beschichtungsmaterials. Wird die Sinterung unter Druck ausgeführt, beispielsweise gleichzeitig mit dem Schritt (c) des Pressens, werden entsprechend niedrigere Temperaturen angewendet.

Im Rahmen der vorliegenden Erfindung wird unter dem Begriff "Ausgangsmaterial" das unmittelbar in Schritt (b) zur Erzeugung der Beschichtung eingesetzte Material (Edukt) vor seiner Abscheidung verstanden. "Beschichtungsmaterial" hingegen bezeichnet das Material der in Schritt (b) abgeschiedenen Beschichtung auf der Oberfläche der Partikel. Das Ausgangsmaterial und das Beschichtungsmaterial können chemisch identisch oder unterschiedlich sein. Der Begriff "Matrixmaterial" bezeichnet das im fertigen Permanentmagneten vorliegende Material der Matrix, in welchem die Partikel eingebettet sind. Auch das Matrixmaterial und das Beschichtungsmaterial können chemisch identisch oder unterschiedlich sein. Bei den bevorzugten Ausgestaltungen der Erfindung, bei der es sich bei dem Matrixmaterial um ein Glas, eine Glaskeramik, eine Keramik oder ein metallisches Glas handelt, sind üblicherweise das Ausgangsmaterial, das Beschichtungsmaterial und das Matrixmaterial jeweils chemisch unterschiedlich, d. h. das Ausgangsmaterial stellt einen Präkursor (Vorläufer) für das Beschichtungsmaterial dar und das Beschichtungsmaterial einen Präkursor für das Matrixmaterial.

Im Rahmen der vorliegenden Erfindung wird ferner unter einem "magnetischen Material", einem "Magnetmaterial", einem "permanentmagnetischen oder dauermagnetischen Material" ein ferromagnetischer oder ferrimagnetischer Werkstoff verstanden, der nach seiner Magnetisierung dauerhaft ein Magnetfeld erzeugt und andere ferro- oder ferrimagnetische Körper anzieht oder abstößt (je nach Ausrichtung der magnetischen Pole). Ein solcher Werkstoff wird in dem Verfahren als zu beschichtendes Pulvermaterial eingesetzt und bildet nach der Prozesskette im fertigen Magnet die Magnetkerne aus. Demgegenüber ist die aus dem Beschichtungsmaterial hervorgehende Phase des Matrixmaterials, welche die magnetischen Kerne umhüllt und einbettet, aus einem para- oder diamagnetischen Werkstoff, d. h. umgangssprachlich nicht magnetisch.

Grundsätzlich kann die Beschichtung in Schritt (b) mittels beliebiger Verfahren erfolgen, umfassend Nasstechniken wie das Sol-Gel-Verfahren, sowie trockene Abscheidungsprozesse. Vorliegend bevorzugt erfolgt die Beschichtung mittels eines trockenen Abscheidungsprozesses, insbesondere mittels eines chemischen oder physikalischen Gasabscheidungsverfahrens. Trockene Abscheidungsverfahren haben gegenüber Nassverfahren den Vorteil, keine zum Teil teuren Lösungsmittel zu benötigen und somit auch keine Maßnahmen zur Lösungsmittelentsorgung oder -wiederaufreinigung. Zudem erübrigen sich energieintensive Trocknungsprozesse. Gleichzeitig sind die chemischen und physikalischen Gasabscheidungsverfahren mit einer hohen Flexibilität hinsichtlich der einsetzbaren Beschichtungsmaterialien durchführbar. Dabei werden unter physikalischen Gasabscheidungsverfahren (PVD, *physical vapor deposition*) vakuumbasierte Beschichtungsverfahren verstanden, bei denen mit Hilfe verschiedener physikalischer Verfahren das Ausgangsmaterial in die Gasphase überführt und auf dem zu beschichtenden Substrat (Magnetpartikel) zumeist im Wege der Kondensation abgeschieden wird. Die verschiedenen Varianten der PVD unterscheiden sich hauptsächlich durch die Art der Überführung des Ausgangsmaterials in die Gasphase. Insbesondere werden Verdampfungsverfahren und Sputtern unterschieden. Zu den Verdampfungsverfahren zählen thermisches Verdampfen, Laserstrahlverdampfen, Lichtbogenverdampfen und Elektronenstrahlverdampfen. Beim Sputtern hingegen (auch als Kathodenzerstäubung bezeichnet) wird das Ausgangsmaterial durch lonenbeschuss zerstäubt. Alle diese Verfahren können im Rahmen der vorliegenden Erfindung eingesetzt werden. Auch bei der chemischen Gasphasenabscheidung (CVD, *chemical vapor deposition*) wird die Ausgangsverbindung mit verschiedenen Techniken in die Gasphase überführt. Die CVD unterscheidet sich von den physikalischen Prozessen dadurch, dass die Abscheidung des Beschichtungsmaterials auf der Oberfläche des Substrats aufgrund einer chemischen Reaktion der in der Gasphase vorliegenden Komponente aufgrund chemischer Reaktion zu einer Feststoffkomponente erfolgt. Dabei liegt das Ausgangsmaterial in einer flüchtigen Form in der Gasphase vor und scheidet sich als eine weniger flüchtige Verbindung ab, z. B. elementar oder als Oxid.

Bevorzugt wird das gesamte Verfahren zur Herstellung eines Permanentmagneten, eventuell mit Ausnahme eines etwaigen Nassmahlverfahrens zur Herstellung des Magnetpulvers, ausschließlich in Trockenprozessen durchgeführt.

Als Matrixmaterial kommen im Rahmen der vorliegenden Erfindung diamagnetische oder paramagnetische Materialien zum Einsatz. Dieses sind Glasmaterialien, Glaskeramiken, Keramiken oder metallische Gläser, aber auch paramagnetische oder diamagnetische Metalle, beispielsweise Dy, Tb, Al, Pt, Ti, Cu, Pb, Zn, Ga, Ge, Au, Ag, Mg, Mo, Mn, Zr, Li etc. oder deren Legierungen oder Oxide. Möglich sind auch Mischungen der vorgenannten Materialien. Das Matrixmaterial ist ein Glas, eine Glaskeramik oder eine Keramik. Unter Gläsern werden amorphe Substanzen verstanden, die strukturell als ein unregelmäßiges Gefüge (Netzwerk) vorliegen (im Gegensatz zu kristallinen Substanzen, die in einer geordneten Gitterstruktur vorliegen). Chemisch basieren Gläser auf SiO₂ und anderen Metalloxiden, wie Al₂O₃, Na₂O, K₂O, MgO, CaO, B₂O₃, TiO₂, PbO, P₂O₅. Vorliegend bevorzugte Gläser umfassen Quarz, Kronglas, Kalk-Natron-Glas, Floatglas, Borosilikatglas. In den meisten Glaszusammensetzungen liegen Mischungen verschiedener Oxide mit variablen SiO₂-Anteilen vor. Die verschiedenen Oxide liegen im Glas nicht in Form separater niedermolekularer Moleküle vor, sondern als ausgedehnte Netzwerke. So liegt das Siliziumoxid als Silikat in Form miteinander verketteter SiO₄-Tetraeder vor. Glaskeramiken weisen grundsätzlich gleiche oder ähnliche chemische Zusammensetzungen wie Gläser auf. Sie unterscheiden sich von Gläsern darin, dass neben glasigen Phasen auch polykristalline Phasen vorhanden sind. Keramische Materialien umfassen mineralische Silikatmaterialien, d. h. ebenso wie die Gläser oder Glaskeramiken SiO₂- beziehungsweise SiO₄-basierte Materialien wie Kaoline oder Tonmineralien, oxidische Keramiken, die auf Aluminiumoxid, Berylliumoxid oder anderen beruhen, nicht oxidische Materialien sowie Carbide und Nitride, wie Siliziumcarbid SiC, Borcarbid BC oder Bornitrid BN. Hinsichtlich der chemischen Zusammensetzung existieren Überschneidungen der keramischen Materialien zu den Gläsern oder Glaskeramiken. Unter metallischen Gläsern werden Metalllegierungen verstanden, die anders als gewöhnliche Metalle oder Metalllegierungen amorph sind, d. h. keine geordnete Gitterstruktur aufweisen.

Gläser, Glaskeramiken oder Keramiken zeichnen sich durch einen besonders hohen Korrosionsschutz sowie Schutz vor Entzündung aus.

Das diamagnetische oder paramagnetische Matrixmaterial ist so zu wählen, dass es eine niedrigere Transformationstemperatur T_{g} bzw. Schmelztemperatur Tₘ aufweist als das Magnetmaterial, damit es bei seiner Sinterung nicht zu einem Sintern des letzteren kommt. Vorzugsweise liegt die Transformationstemperatur T_{g} bzw. Schmelztemperatur Tₘ zumindest 100 K, insbesondere zumindest 200 K unterhalb der Schmelztemperatur des Magnetmaterials. Die Transformationstemperatur T_{g} oder Schmelztemperatur Tₘ kann beispielsweise mittels kalorimetrischer Verfahren (Differentialscanningkalorimetrie DCS) bestimmt werden.

Vorzugsweise wird in Schritt (c) des Verfahrens als Ausgangsmaterial ein chemisches Vorläufermaterial des diamagnetischen oder paramagnetischen Matrixmaterials eingesetzt. Für die Erzeugung von Gläsern, Glaskeramiken oder Keramiken, die alle hauptsächlich aus oxidischen Materialien bestehen, kommen abhängig von dem gewählten Beschichtungsverfahren beispielsweise Salze oder flüchtige Verbindungen wie etwa Hydride in Frage. Insbesondere werden Vorläuferverbindungen der Elemente Si, Al, Na, K, Mg, Ca, B, P, Pb, Ti, Li, Be und anderen eingesetzt, je nachdem welche Zusammensetzung des Matrixmaterials erzeugt werden soll. Nach Zersetzung entstehen aus diesen Verbindungen häufig die entsprechenden elementaren Komponenten, die noch in der Gasphase oder nach der Abscheidung auf der Partikeloberfläche zu den entsprechenden Oxiden reagieren. In der Regel liegen diese Materialien am Ende des Beschichtungsschritts (b) in oxidischer Form in feinpartikulärer Struktur vor ("weißer Ruß"). Erst nach der Sinterung entstehen aus diesen Oxiden die gewünschten Glas-, Keramik- oder Glaskeramik-Materialien.

Das magnetische Material ist insbesondere ein ferromagnetisches Metall, vorzugsweise eine ferromagnetische Metalllegierung. Insbesondere werden hier Legierungen des Typs SE-TM-B oder SE-TM eingesetzt, wobei SE ein Element der Seltenen Erden ist, TM ein Übergangsmetall der Eisengruppe (Eisen Fe, Cobalt Co, Nickel Ni), und B Bor bedeutet. Ein typischer Vertreter des ersten Typs sind Nd-Fe-B-Legierungen, während ein Beispiel des zweiten Typs Legierungen aus Sm und Co darstellen. Derartige Legierungen zeichnen sich durch besonders hohe Koerzitivfeldstärken aus.

Das in Schritt (a) bereit gestellte Pulver des Magnetmaterials weist einen Partikeldurchmesser von höchstens 3 µm auf, bevorzugt höchstens 1 µm. Vorzugsweise liegt der Partikeldurchmesser im Bereich von 0,1 bis 0,6 µm (100 bis 600 nm) und besonders bevorzugt im Bereich von 0,2 bis 0,4 µm (200 bis 400 nm). Partikelgrößen in diesem Bereich entsprechen im Wesentlichen der Größe magnetischer Domänen, so dass die genannten Durchmesser mit einer besonders hohen Magnetfeldstärke einhergehen. Wie bereits erläutert, bleiben die eingesetzten Durchmesser der Partikel durch das erfindungsgemäße Verfahren erhalten und liegen demgemäß auch im fertigen Magnet in Form so genannter Eindomänenteilchen vor.

Vorzugsweise wird in Schritt (b) eine Schichtdicke des Beschichtungsmaterials erzeugt, welche höchstens 100 nm beträgt. Insbesondere liegt die Schichtdicke im Bereich von 1 bis 10 nm, vorzugsweise im Bereich von 2 bis 5 nm liegt. Diese Schichtdicken sind einerseits ausreichend, um eine ausreichende magnetische Isolierung sowie Passivierung der entzündlichen Partikel zu erzielen. Auf der anderen Seite sind die Schichtdicken klein genug, um die Magnetfelddichte des Magneten nicht wesentlich zu beschränken.

Ein weiterer Aspekt der vorliegenden Erfindung betrifft einen Permanentmagneten, umfassend Kerne eines permanentmagnetischen Materials mit einem mittleren Partikeldurchmesser von höchstens 3 µm, vorzugsweise höchstens 1 µm und einer Matrix eines diamagnetischen oder paramagnetischen Materials, in der die Kerne eingebettet sind. Dabei gehen die Kerne aus dem eingesetzten Pulver des Magnetmaterials hervor und entsprechen chemisch somit diesem. Das Matrixmaterial hingegen resultiert aus dem gesinterten Beschichtungsmaterial. Dementsprechend gelten die vorstehenden Ausführungen zu dem Magnetmaterial und dem Matrixmaterial auch für den fertigen Magneten.

Die erfindungsgemäßen Permanentmagnete können überall dort Anwendung finden, wo auch herkömmliche Magnete eingesetzt werden. Dies betrifft insbesondere elektrische Maschinen, beispielsweise Elektromotoren, speziell solche zum alleinigen oder kombinierten Antrieb von Fahrzeugen (BEV bzw. HEV) oder für Steuerlenkungsantriebe. Darüber hinaus können die Magnete mit Vorteil auch in medizinischen Bereichen eingesetzt werden, beispielsweise in Magnetresonanztomographen oder dergleichen.

Schließlich betrifft die vorliegende Erfindung eine elektrische Maschine, umfassend zumindest einen erfindungsgemäßen Permanentmagneten, insbesondere eine Mehrzahl von solchen. In besonderer Ausführung ist die elektrische Maschine als Elektromotor ausgebildet, bei dem die Permanentmagnete typischerweise Teil des Rotors sind, beispielsweise in ein Blechpaket des Rotors eingebettet sind oder auf dessen Oberfläche befestigt sind.

Die Erfindung wird nachfolgend in Ausführungsbeispielen anhand von Figuren näher erläutert. Es zeigen:
- Figur 1: ein Fließschema eines Verfahrens des Standes der Technik zur Herstellung eines Permanentmagneten;
- Figur 2: ein Fließschema des erfindungsgemäßen Verfahrens zur Herstellung eines Permanentmagneten nach einer Ausgestaltung;
- Figur 3: struktureller Aufbau verschiedener Zwischenprodukte einzelner Verfahrensschritte sowie des Endprodukts des erfindungsgemäßen Verfahrens;
- Figur 4: CVD-Beschichtungsapparatur zur Beschichtung des Magnetpulvers;
- Figur 5: Presswerkzeug zum mechanischen Pressen des beschichteten Magnetpulvers zu einem Pressling in einem Magnetfeld;
- Figur 6: Prozessschritt des Sinterns des Presslings in einem Ofen und
- Figur 7: Prozessschritt des Temperns des Magneten im Ofen.

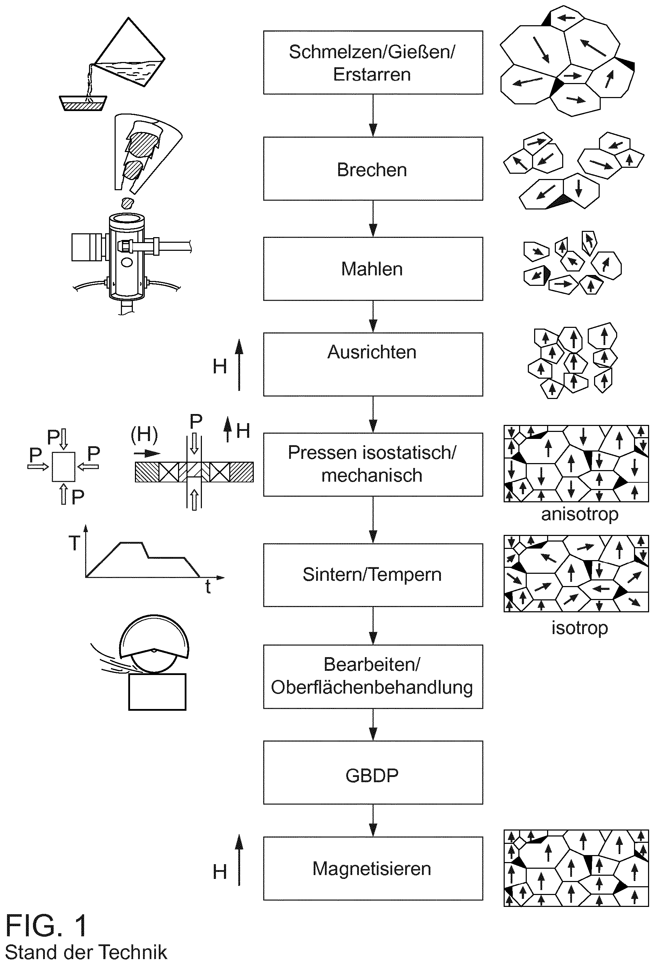

Ein im Stand der Technik bekanntes beispielhaftes Verfahren zur Herstellung von Permanentmagneten zeigt Figur 1 (mittlere Spalte). Auf der linken Seite sind die einzelnen Prozessschritte figürlich dargestellt, während auf der linken Seite die strukturellen Ergebnisse der einzelnen Prozessschritte stark schematisiert dargestellt sind.

Zunächst wird ein ferromagnetisches Material (nachfolgend Magnetmaterial) beispielsweise in einem Vakuuminduktionsofen geschmolzen, gegossen und durch Abkühlung erstarrt. Dabei werden kristalline Strukturen isotroper Legierungen erhalten. Nach dem Aushärten werden die beispielsweise barrenförmigen Gebilde mechanisch gebrochen und anschließend beispielsweise in einer Jet-Mühle unter Stickstoffatmosphäre gemahlen. Das so entstandene Pulver besteht aus einzelnen Partikeln, deren Durchmesser in der Größenordnung von 3-5 µm liegen. Optional kann das Pulver in einem externen Magnetfeld ausgerichtet werden, so dass dieses magnetisch anisotrop vorliegt. Das Pulver wird anschließend im Werkzeug mit einer mechanischen Presse zu einem Pressling (auch Grünkörper genannt) gepresst, wobei je nach Pressdruck eine mehr oder weniger kompakte Struktur entsteht. Das Pressen kann isostatisch durchgeführt werden, wobei der Pressdruck gleichmäßig aus allen Raumrichtungen auf den Pressling ausgeübt wird, oder anisostatisch, wobei der Pressdruck in der Regel mechanisch aus einer oder aus zwei entgegengesetzten Raumrichtung/en einwirkt. Im Falle einer zuvor erfolgten Magnetisierung wird das Pressen isostatisch durchgeführt. Ferner kann das Pressen ohne ein externes Magnetfeld erfolgen, sodass ein isotroper Pressling entsteht, in welchem keine magnetische Kristallorientierung vorhanden ist. Weitaus häufiger erfolgt das Pressen jedoch in einem externen Axial- oder Quer-Magnetfeld, woraus anisotrope Presslinge hervorgehen, in welchen eine gerichtete Kristallorientierung entlang der Magnetisierungsachse vorhanden ist. Im folgenden Schritt wird der Pressling gesintert. Unter Sintern versteht der Fachmann ein Verfahren, bei dem feinkörnige, keramische oder metallische Stoffe auf Temperaturen kleiner/gleich deren Schmelztemperaturen unter unterschiedlichen Atmosphären erhitzt werden. Durch den Vorgang des Sinterns gehen die Partikel des Pulvers mechanische Bindungen ein, teilweise auch stoffschlüssige Verbindungen. Beispielsweise werden bei Legierungen des Typs Nd-Fe-Bor, z. B. Nd₂Fe₁₄B Temperaturen im Bereich von 1.000 bis 1.150 °C zum Sintern angewandt. Durch das Zusammenwachsen einzelner Kristallite des Gefüges entstehen Körner mit einem Durchmesser in der Größenordnung von 3 bis 10 µm. Nach dem Sintern liegt ein isotroper Körper vor, da die Curietemperatur überschritten wurde. Optional kann ein Temperprozess anschließen, bei dem der Magnet einer weiteren thermischen Behandlung, allerdings unter einer niedrigeren Temperatur als der Sintertemperatur ausgesetzt wird (Niedertemperaturbehandlung). Ziel des Temperns ist z. B. der Abbau von Restspannungen im Kristallgefüge. Anschließend kann eine formgebende Bearbeitung und/oder Oberflächenbehandlung erfolgen, um den Magneten eine gewünschte Form und Abmessung zu verleihen. Es kommen insbesondere spanende Techniken zum Einsatz, wie Schleifen, Schneiden, Fräsen oder andere. Ferner ist die Aufbringung von Oberflächenbeschichtungen üblich, beispielsweise eines Epoxidharzes oder einer metallischen Schicht aus Kupfer, Nickel, Aluminium oder anderen. Durch erneutes Einbringen in ein externes Magnetfeld werden die magnetischen Domänen aufmagnetisiert, sofern das Pressen nicht bereits anisostatisch erfolgte.

Es ist ferner bekannt, insbesondere vor dem Magnetisieren einen als "Grain Boundary Diffusion Process" (GBDP) bezeichneten Prozess durchzuführen, um die Koerzitivfeldstärke und die Temperaturfestigkeit des Magneten zu erhöhen. Zu diesem Zweck wird in den Magneten vor seiner Beschichtung ein weiterer Stoff eingebracht, beispielsweise Dysprosium Dy, Terbium Tb oder Kuper Cu. Die Nachteile dieses Schritts wurden einleitend bereits genannt.

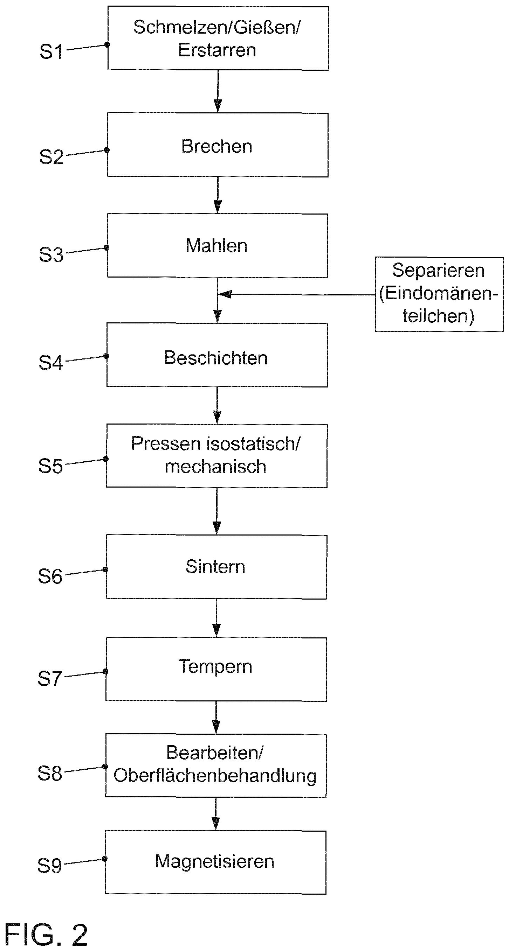

Um das oben beschriebene Kristallwachstum während des Sinterns zu vermeiden, wird erfindungsgemäß ein Verfahren vorgeschlagen, das nachfolgend anhand der Figuren 2 bis 7 beispielhaft erläutert wird.

Die ersten Schritte S1 bis S3, mit denen ein Pulver eines magnetischen Materials, z. B. einer Legierung der Zusammensetzung Nd₂Fe₁₄B, bereitgestellt wird, entsprechen im Wesentlichen den bereits im Zusammenhand mit Figur 1 erläuterten Schritten. Im Rahmen des erfindungsgemäßen Verfahrens wird ein Pulver bereitgestellt, das nach Schritt S3 eine mittlere Partikelgröße von ≤ 3 µm, insbesondere ≤ 1 µm, idealerweise 200 bis 400 nm aufweist und somit in Form von Eindomänenteilchen vorliegt.

Optional kann nach dem Mahlschritt S3 eine Separierung der Pulverpartikel vorgenommen werden. Durch das Separieren der Partikel wird ein definierter Korngrößenbereich abgetrennt, d. h. es wird nur eine Fraktion definierter Partikelgrößen für das weitere Verfahren eingesetzt. Hierdurch wird die Vereinheitlichung der Partikelgrößen und infolge dessen eine hohe Packungsdichte der magnetischen Kerne (magnetische Kristalle) im fertigen Permanentmagnet erzielt. Hierdurch werden höhere magnetische Feldstärken erreicht.

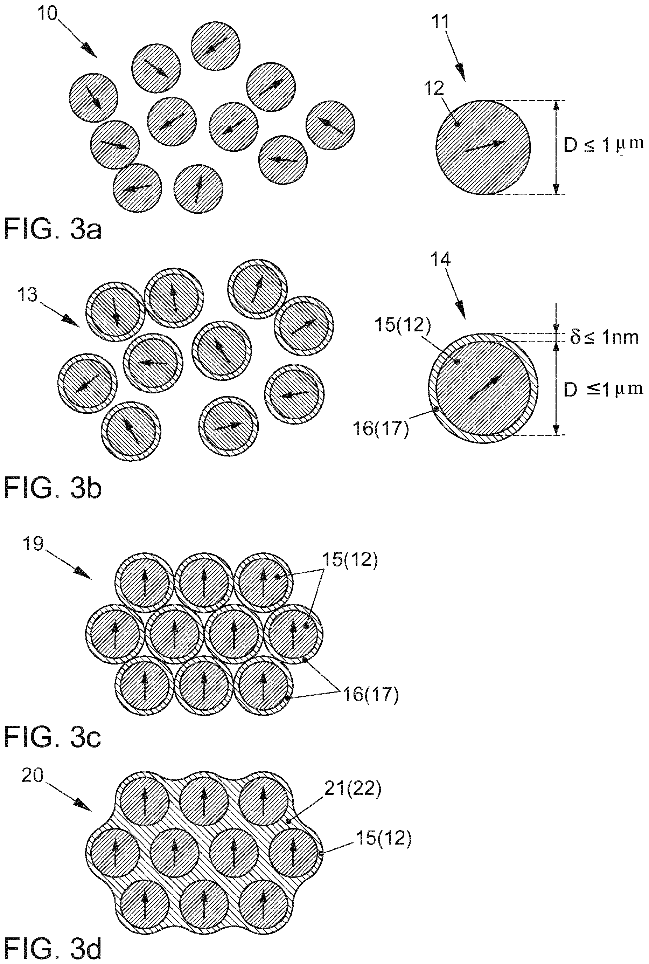

Figur 3 zeigt stark schematisiert den strukturellen Aufbau der Zwischenprodukte verschiedener Prozessschritte des Verfahrens. Das in Schritt S3 aus Figur 2 erzeugte Pulver 10 besteht aus Partikeln 11 des Magnetmaterials 12. Die magnetischen Ausrichtungen der Domänen (siehe Pfeile) sind statistisch im Raum verteilt, d. h. das Material ist magnetisch isotrop. Der mittlere Partikeldurchmesser D ist insbesondere kleiner oder gleich 1 µm, idealerweise 0,2 bis 0,4 µm.

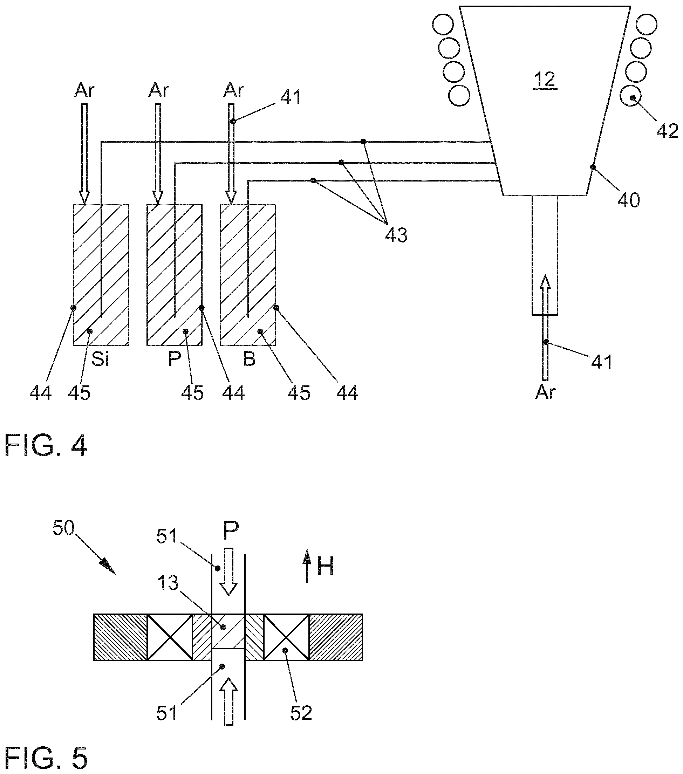

Im anschließenden Schritt S4 (Figur 2) erfolgt das Beschichten der Pulverpartikel mit einer Schicht eines diamagnetischen oder paramagnetischen Beschichtungsmaterials oder einem chemischen Vorläufermaterial (Präkursor) eines solchen. Dieser Beschichtungsprozess ist in Figur 4 dargestellt. In dem hier gezeigten Beispiel erfolgt die Beschichtung mit einem Verfahren der chemischen Gasphasenabscheidung CVD. Das Pulver 12 wird in einer Reaktionskammer 40 durch ein Trägergas 41 eines Inertgases, beispielsweise Argon Ar oder Stickstoff N₂, verwirbelt und somit in der Schwebe gehalten. Die Reaktionskammer 40 ist mit einer Heizeinrichtung 42 ausgestattet. Die Reaktionskammer 40 ist ferner über Leitungen 43 mit Vorratsbehältern 44 verbunden, in welchen jeweils ein Ausgangsmaterial 45 für die aufzubringende Beschichtung in Form einer flüchtigen Vorläuferverbindung vorliegt. In dem dargestellten Beispiel enthält einer der Behälter 44 eine Vorläuferverbindung des Siliziums, ein weiterer eine Vorläuferverbindung des Phosphors und ein dritter eine Vorläuferverbindung des Bors. Abhängig von der aufzubringenden Beschichtung können jedoch auch andere Verbindungen vorgehalten werden sowie auch eine andere Anzahl. Mittels weiterer Trägergasströme 41 werden die flüchtigen Vorläuferverbindungen über die Leitungen 43 in den Reaktionsbehälter 40 gefördert. Die Einstellung einer gewünschten Zusammensetzung der Beschichtung erfolgt über die Einstellung der einzelnen Volumenströme. In der Reaktionskammer 40 zersetzen sich die Vorläuferverbindungen thermisch (Pyrolyse), wobei zumeist die elementaren Komponenten der Oxidationsstufe Null entstehen. Diese, in der Regel nicht flüchtigen Komponenten scheiden sich an den Oberflächen der Pulverpartikel 11 des Pulvers 12 des Magnetmaterials ab, wo sie mit Sauerstoff, der vorzugsweise mit dem Trägerstrom 41 in definierten Mengen in die Reaktionskammer 40 eingetragen wird, zu entsprechenden Oxiden reagieren. Möglich ist auch, dass die elementaren Komponenten bereits in der Gasphase, also vor ihrem Abscheiden zu den entsprechenden Oxiden oxidieren.

Das Ergebnis der Beschichtungsstufe ist in Figur 3b gezeigt. Das beschichtete Pulver 13 besteht nunmehr aus beschichteten Partikeln 14, welche jeweils einen Kern 15 des Magnetmaterials 12 aufweisen sowie eine Schicht 16 des Beschichtungsmaterials 17, welche den Kern 15 umhüllt. Die Partikel 14 weisen somit eine Schale/Kernstruktur (shell/core) auf. Aus diesem Grund wird dieser Prozess vorliegend auch als SCIP (Shell Core Isolation Process) bezeichnet. In dieser Stufe weist das Beschichtungsmaterial 17 noch keine glasartige Struktur auf. Vielmehr liegt es als pulverförmige Struktur der einzelnen Oxide der Ausgangsmaterialien vor (in diesem Beispiel des Siliziums, Phosphors und Bors) vor und besitzt häufig eine weiße, nicht transparente Erscheinung ("weißer Ruß").

Im anschließenden Schritt S5 (siehe Figur 2) erfolgt das Pressen des beschichteten Pulvers zu einem Pressling.

Dieser Vorgang ist in Figur 5 dargestellt, worin mit 50 ein Presswerkzeug bezeichnet ist, welches das beschichtete Pulver 13 aufnimmt. Das Presswerkzeug 50 weist zwei vertikal bewegbare Pressstempel 51 auf, welche von zwei gegenüber liegenden Seiten das Pulver 13 einschließen und auf dieses einwirken und somit mit einem Druck p beaufschlagen (anisotropes Pressen). Das Presswerkzeug 50 weist ferner eine Spule 52 auf, die ein gerichtetes axiales Magnetfeld H erzeugt, so dass das Pulver 13 während seines Verpressens mit dem Magnetfeld H beaufschlagt wird und kristallographisch orientiert wird. Das hier dargestellte mechanische Pressen im Axialfeld entspricht einer bevorzugten Ausführung des Verfahrens. Möglich ist jedoch ebenso, die Schritte des Pressens und magnetischen Ausrichtung in separaten Schritten durchzuführen, d. h. zunächst das Pulver auszurichten, isostatisch zu verpressen, dann zu sintern und anschließend in einem externen magnetischen Feld zu magnetisieren.

Das Ergebnis des mechanischen Pressens im Magnetfeld ist in Figur 3c dargestellt. Produkt des Pressens ist ein Pressling 19, der auch als Grünling oder Grünkörper bezeichnet wird, in dem die beschichteten Partikel verdichtet und mehr oder weniger geordnet vorliegen. Ferner weisen sie eine gemeinsame Ausrichtung ihrer magnetischen Dipole auf, so dass der Pressling 19 selbst ein äußeres Magnetfeld erzeugt. Es sei angemerkt, dass während des Pressens Bedingungen herrschen, unter denen keine chemische Veränderung des Beschichtungsmaterials 17 oder des Magnetmaterials 12 erfolgt. Auch findet nach einer bevorzugten Ausgestaltung (noch) kein Sintern des Beschichtungsmaterials statt.

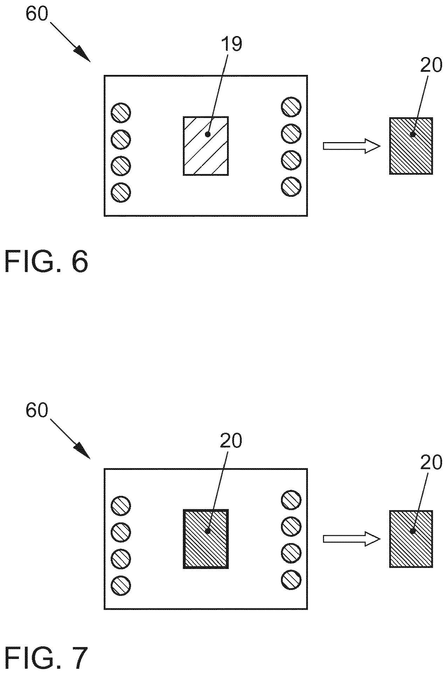

Erst im anschließenden Schritt S6 (siehe Figur 2) erfolgt ein Sintern des Presslings, welches in Figur 6 gezeigt ist. Hierfür wird der Pressling 19 in einen Ofen 60 eingebracht. Dabei erfolgt die Erwärmung des Presslings 19 auf eine Temperatur unterhalb der Schmelztemperatur des Magnetmaterials 12, jedoch bei einer Temperatur, bei der das Beschichtungsmaterial 17 in die Glasphase übergeht (vitrifiziert) und sintert. Mit anderen Worten, liegt die Temperatur des in Figur 6 gezeigten Sinterns bei einer Temperatur, die im Transformationsbereich des Beschichtungsmaterials (hier des Glases) liegt. Als Sinteratmosphäre kommen in Frage Vakuum, Vakuum mit einem vorbestimmten Partialdruck von N₂ oder Ar, eine Stickstoff-, Argon- oder Heliumatmosphäre oder eine oxidative Atmosphäre, z. B. Luft und andere.

Im Anschluss an das Sintern erfolgt optional das Tempern des Magneten (Schritt S7 in Figur 2), was in Figur 7 dargestellt ist. Dabei wird im selben oder einem anderen Ofen 60 wie in Figur 6 der Magnet 20 einer Niedertemperaturbehandlung ausgesetzt, um mechanische Spannungen im Magneten 20 abzubauen. Dabei wird eine Temperatur eingestellt, die kleiner oder gleich der in Schritt S6 angewandten Sintertemperatur liegt. Durch das Tempern werden Restspannungen im Material reduziert und das Kristallgefüge des Magneten relaxiert. Die Temperatur des Temperns hängt von der Zusammensetzung des Matrixmaterials ab und beträgt beispielsweise 250 bis 550 °C.

Im Anschluss an das Tempern kann optional eine mechanische Bearbeitung des Magneten 20 erfolgen (Schritt S8 in Figur 2), um diesem eine gewünschte Form zu verleihen. Jedoch wird vorzugsweise die gewünschte Form bereits während des Verpressens in Schritt S5 erzeugt. Ferner kann der Magnet noch beliebigen Oberflächenbehandlungen und/oder Beschichtungsvorgängen ausgesetzt werden. Aufgrund der Matrix kann grundsätzlich jedoch auf eine Beschichtung zum Korrosionsschutz verzichtet werden.

Sofern die Kristallorientierung und das Pressen in Schritt S5 isostatisch erfolgt, wird in einem Schritt S9 der gesinterte Pressling in einem externen Magnetfeld magnetisiert, um die magnetischen Domänen auszurichten.

Die Schritte des Pressens (S5) des Sinterns (S6) sowie des Magnetisierens (S9) können in beliebiger Reihenfolge oder in beliebigen Kombinationen gleichzeitig durchgeführt werden. Vorzugsweise erfolgt das Pressen im Magnetfeld gleichzeitig mit dem Magnetisieren (mechanisches Pressen) und noch stärker bevorzugt werden alle drei Prozesse gleichzeitig durchgeführt, d. h. das mechanische Pressen im Magnetfeld erfolgt unter gleichzeitiger Temperaturbeaufschlagung zum Sintern des Beschichtungsmaterials. Sofern das Pressen bei Raumtemperatur durchgeführt wird (Kaltpressen), beträgt der Pressdruck beispielsweise 250-800 MPa. Im Falle des Heißpressens betragen die Bedingungen beispielsweise 50-150 MPa bei 650-850 °C.

Das Ergebnis des Sinter- bzw. Magnetisierungsschritts zeigt Figur 3d. Der entstandene Permanentmagnet 20 weist nunmehr eine durchgehende Matrix 21 des Matrixmaterials 22 auf, welches im vorliegenden Beispiel aus dem gebildeten Glas besteht und typischer- aber nicht notwendigerweise transparent ist. In dieser Matrix 21 liegen die eingebetteten Kerne 15 des Magnetmaterials 12 in einer mehr oder weniger geordneten Kristallpackung vor. Da während des gesamten Verfahrens eine Sinterung der Partikel des Magnetmaterials durch entsprechende Wahl der Prozessparameter Druck und Temperatur verhindert wurde, entsprechen die Partikeldurchmesser der Kerne 15 weiterhin im Wesentlichen dem ursprünglichen mittleren Partikeldurchmesser D des Pulvers 12, d. h. sie betragen insbesondere höchstens 1 µm, vorzugsweise liegen sie im Bereich von 200 bis 400 nm. Der mittlere Abstand der Kerne 15 innerhalb der Matrix 21 wird durch die ursprüngliche Schichtdicke δ der Beschichtung 16 des Beschichtungsmaterials 17 bestimmt. Der Abstand beträgt höchstens das 2-Fache der ursprünglichen Schichtdicke δ der Beschichtung 16 und liegt somit vorzugsweise im Bereich weniger Nanometer, insbesondere liegt der mittlere Abstand im Bereich ≤ 10 nm.

Die erfindungsgemäßen Magneten, welche mittels des erfindungsgemäßen Verfahrens hergestellt werden können, weisen folgende Vorteile auf:
- vergrößerte Koerzitivfeldstärke und somit Temperaturbeständigkeit aufgrund der geringeren Partikel- bzw. Korngröße;
- Korrosionsbeständigkeit aufgrund der Beschichtung der metallischen Partikel;
- größere mechanische Festigkeit (Härte) aufgrund der geringeren Partikelgröße und höheren Packungsdichte;
- Reduktion im Magneten entstehender Wirbelströme aufgrund der dielektrischen Isolationswirkung der Beschichtung in Verbindung mit der geringen Partikelgröße;
- höherer Wirkungsgrad wegen elektrischer Isolierung der Partikel (geringerer Wirbelstrom = geringere Wärmeentstehung im Magnet = höhere Temperaturbeständigkeit);
- gleichmäßige Verteilung des Magnetflusses, da es kein Kornwachstum auftritt;
- Entfall der Beschichtung des Endmagneten;
- keine oder minimaler Verzug der Magnete beim Sintern (beim Stand der Technik entsteht der Verzug, die Magnete müssen einzeln nachgeschliffen werden);
- engere Toleranzanforderungen sind erzielbar
- frei von Dy und Tb (falls gewünscht)
- keine komplexe Gefügebildung;
- keine Bildung von Nd-reicher Phase (flüssige Phase durch Materialmatrix), d. h. die magnetische Entkoppelung der Magnetteilchen findet durch Beschichtungsmaterial statt = Gehaltreduzierung von Nd bis ca. 8 % (Kostenreduzierung);
- keine Bildung von unerwünschter η-Phase;
- keine Bildung von α Fe dendritischer Phase;
- kein Kornwachstum;
- keine Begrenzung in Bezug auf Magnetabmessungen (bei GBDP sind die Magnete auf < 5 mm beschränkt);
- Eliminierung der Entzündungsgefahr des Pulvers;
- Produktionsprozesse (nach der Pulverbeschichtung) durchführbar unter normaler Atmosphäre, problemlose Lagerung des Pulvers;
- keine Restporosität im Magneten nach dem Sintern;
- keine Beeinflussung der Magnetlegierung durch Sintervorgänge;
- Umweltfreundlichkeit: Magnete 100 % recyclebar. Trennung der Magnetkerne durch Aufwärmung der Materialmatrix (flüssige Phase). SCIP bleibt vorhanden, keine Agglomeratbildung der Magnetkerne (Magnetteichen).

### Bezugszeichenliste

- 10: Pulver
- 11: Partikel
- 12: Magnetmaterial
- 13: Pulver (beschichtet)
- 14: Partikel (beschichtet)
- 15: Kern
- 16: Beschichtung
- 18: Beschichtungsmaterial
- 19: Pressling
- 20: Permanentmagnet
- 21: Matrix
- 22: Matrixmaterial

- 40: Reaktionsbehälter
- 41: Trägergas
- 42: Heizeinrichtung
- 43: Leitungen
- 44: Vorratsbehälter
- 45: Ausgangsmaterial
- 46: Trägergas
- 50: Presswerkzeug
- 51: Pressstempel
- 52: Spule

## Patentansprüche

1. Verfahren zur Herstellung eines Permanentmagneten (20), umfassend die Schritte:
(a) Bereitstellen eines Pulvers (10) eines magnetischen Materials (12) mit einem mittleren Partikeldurchmesser von höchstens 3 µm,
(b) Beschichten der Pulverpartikel (11) mit einer Beschichtung (16) eines diamagnetischen oder paramagnetischen Beschichtungsmaterials (17),
(c) Pressen der beschichteten Partikel (13) zu einem Pressling (19),
(d) Sintern des Beschichtungsmaterials (17) bei einer Temperatur, die kleiner als eine zur Sinterung des magnetischen Materials (12) geeignete Temperatur ist, unter Überführung des Beschichtungsmaterials (17) in eine Matrix (21) eines diamagnetischen oder paramagnetischen Materials (22), welche die Partikel des magnetischen Materials (12) einbettet, wobei das Matrixmaterial (22) ein Glas, eine Glaskeramik, eine Keramik oder ein metallisches Glas ist, und wobei das Glas oder die Glaskeramik auf SiO₂ und anderen Metalloxiden, umfassend Al₂O₃, Na₂O, K₂O, MgO, CaO, B₂O₃, TiO₂, PbO und/oder P₂O₅, basiert; die Keramik mineralische Silikatmaterialien, oxidische Keramiken und nicht oxidische Materialien umfasst; und das metallische Glas eine amorphe Metalllegierung umfasst, und
(e) Magnetisieren des magnetischen Materials (12) in einem externen Magnetfeld,
wobei die Schritte (c), (d) und (e) in beliebiger Reihenfolge nacheinander oder in beliebigen Kombinationen zeitgleich durchgeführt werden.

2. Verfahren nach Anspruch 1, wobei die Wärmebehandlung in Schritt (d) bei einer Temperatur durchgeführt wird, die höchstens einer Transformations- oder Schmelztemperatur des Beschichtungsmaterials (17) entspricht, vorzugsweise mindestens 50 K kleiner als diese ist.

3. Verfahren nach einem der vorhergehenden Ansprüche, wobei das Beschichten in Schritt (b) mittels eines trockenen Abscheidungsprozesses erfolgt, insbesondere mittels eines chemischen oder physikalischen Gasphasenabscheidungsverfahrens.

4. Verfahren nach einem der vorhergehenden Ansprüche, wobei in Schritt (b) als Ausgangsmaterial für das Beschichtungsmaterial (17) ein chemisches Vorläufermaterial des Beschichtungsmaterials (17) eingesetzt wird, das während oder nach der Beschichtung eine chemische Reaktion unter Ausbildung des Beschichtungsmaterials (17) eingeht.

5. Verfahren nach einem der vorhergehenden Ansprüche, wobei das Pulver (10) in Schritt (a) einen mittleren Partikeldurchmesser von höchstens 1 µm aufweist, vorzugsweise einen mittleren Partikeldurchmesser im Bereich von 0,1 bis 0,6 µm, besonders bevorzugt im Bereich von 0,2 bis 0,4 µm.

6. Verfahren nach einem der vorhergehenden Ansprüche, wobei eine in Schritt (b) erzeugte mittlere Schichtdicke der Beschichtung (16) höchstens 100 nm beträgt, insbesondere im Bereich von 1 bis 10 nm liegt, vorzugsweise im Bereich von 2 bis 5 nm.

7. Verfahren nach einem der vorhergehenden Ansprüche, wobei das magnetische Material (12) ein ferromagnetisches Metall oder eine ferromagnetische Metalllegierung ist, insbesondere ausgesucht aus Legierungen des Typs SE-TM-B oder SE-TM, wobei SE ein Element der Seltenen Erden ist, TM ein Übergangsmetall der Eisengruppe und B Bor ist.

8. Permanentmagnet (20) herstellbar mit einem Verfahren der Ansprüche 1 bis 7, umfassend Kerne (15) eines permanentmagnetischen Materials (12) mit einem mittleren Partikeldurchmesser von höchstens 3 µm und eine Matrix (21) eines diamagnetischen oder paramagnetischen Materials (22), in der die Kerne (15) eingebettet sind, wobei das Matrixmaterial (22) ein Glas, eine Glaskeramik, eine Keramik oder ein metallisches Glas ist, und wobei das Glas oder die Glaskeramik auf SiO₂ und anderen Metalloxiden, umfassend Al₂O₃, Na₂O, K₂O, MgO, CaO, B₂O₃, TiO₂, PbO und/oder P₂O₅, basiert; die Keramik mineralische Silikatmaterialien, oxidische Keramiken und nicht oxidische Materialien umfasst; und das metallische Glas eine amorphe Metalllegierung umfasst.

9. Elektrische Maschine umfassend zumindest einen Permanentmagneten (20) nach Anspruch 8.

## Claims

1. Process for producing a permanent magnet (20), which comprises the steps:
(a) providing a powder (10) of a magnetic material (12) having an average particle diameter of not more than 3 µm,
(b) coating of the powder particles (11) with a coating (16) of a diamagnetic or paramagnetic coating material (17),
(c) pressing of the coated particles (13) to give a pressed body (19),
(d) sintering of the coating material (17) at a temperature which is less than a temperature suitable for sintering the magnetic material (12), with conversion of the coating material (17) into a matrix (21) of a diamagnetic or paramagnetic material (22) in which the particles of the magnetic material (12) are embedded, where the matrix material (22) is a glass, a glass-ceramic, a ceramic or a metallic glass and the glass or the glass-ceramic is based on SiO₂ and other metal oxides comprising Al₂O₃, Na₂O, K₂O, MgO, CaO, B₂O₃, TiO₂, PbO and/or P₂O₅; the ceramic comprises mineral silicate materials, oxidic ceramics and nonoxidic materials; and the metallic glass comprises an amorphous metal alloy, and
(e) magnetizing the magnetic material (12) in an external magnetic field,
where the steps (c), (d) and (e) are carried out in succession in any order or simultaneously in any combinations.

2. Process according to Claim 1, wherein the heat treatment in step (d) is carried out at a temperature which corresponds to not more than a transformation or melting temperature of the coating material (17), and is preferably at least 50 K less than this.

3. Process according to either of the preceding claims, wherein the coating in step (b) is carried out by means of a dry deposition process, in particular by means of a chemical or physical vapour deposition process.

4. Process according to any of the preceding claims, wherein a chemical precursor material of the coating material (17), which during or after the coating operation undergoes a chemical reaction with formation of the coating material (17), is used as starting material for the coating material (17) in step (b).

5. Process according to any of the preceding claims, wherein the powder (10) in step (a) has an average particle diameter of not more than 1 µm, preferably an average particle diameter in the range from 0.1 to 0.6 µm, particularly preferably in the range from 0.2 to 0.4 µm.

6. Process according to any of the preceding claims, wherein an average layer thickness of the coating (16) produced in step (b) is not more than 100 nm, in particular is in the range from 1 to 10 nm, preferably in the range from 2 to 5 nm.

7. Process according to any of the preceding claims, wherein the magnetic material (12) is a ferromagnetic metal or a ferromagnetic metal alloy, in particular selected from among alloys of the SE-TM-B or SE-TM type, where SE is a rare earth element, TM is a transition metal of the iron group and B is boron.

8. Permanent magnet (20) producable by a process according to any of Claims 1 to 7, comprising grains (15) of a permanent-magnetic material (12) having an average particle diameter of not more than 3 µm and a matrix (21) of a diamagnetic or paramagnetic material (22) in which the grains (15) are embedded, where the matrix material (22) is a glass, a glass-ceramic, a ceramic or a metallic glass and the glass or the glass-ceramic is based on SiO₂ and other metal oxides comprising Al₂O₃, Na₂O, K₂O, MgO, CaO, B₂O₃, TiO₂, PbO and/or P₂O₅; the ceramic comprises mineral silicate materials, oxidic ceramics and nonoxidic materials; and the metallic glass comprises an amorphous metal alloy.

9. Electric machine comprising at least one permanent magnet (20) according to Claim 8.

## Revendications

1. Procédé de fabrication d'un aimant permanent (20), comprenant les étapes suivantes :
(a) la préparation d'une poudre (10) d'un matériau magnétique (12) ayant un diamètre de particule moyen d'au plus 3 µm,
(b) le revêtement des particules de la poudre (11) avec un revêtement (16) d'un matériau de revêtement diamagnétique ou paramagnétique (17),
(c) la compression des particules revêtues (13) en un comprimé (19),
(d) le frittage du matériau de revêtement (17) à une température qui est inférieure à une température appropriée pour le frittage du matériau magnétique (12), avec transformation du matériau de revêtement (17) en une matrice (21) d'un matériau diamagnétique ou paramagnétique (22), qui incorpore les particules du matériau magnétique (12), le matériau de matrice (22) étant un verre, une vitrocéramique, une céramique ou un verre métallique, et le verre ou la vitrocéramique étant à base de SiO₂ et d'autres oxydes métalliques, comprenant Al₂O₃, Na₂O, K₂O, MgO, CaO, B₂O₃, TiO₂, PbO et/ou P₂O₅ ; la céramique comprenant des matériaux de silicates minéraux, des céramiques oxydiques et des matériaux non oxydiques ; et le verre métallique comprenant un alliage métallique amorphe, et
(e) l'aimantation du matériau magnétique (12) dans un champ magnétique extérieur,
les étapes (c), (d) et (e) étant réalisées successivement dans un ordre quelconque ou simultanément en combinaisons quelconques.

2. Procédé selon la revendication 1, dans lequel le traitement thermique à l'étape (d) est réalisé à une température qui correspond au plus à une température de transformation ou de fusion du matériau de revêtement (17), de préférence qui est inférieure d'au moins 50 K à celle-ci.

3. Procédé selon l'une quelconque des revendications précédentes, dans lequel le revêtement à l'étape (b) a lieu au moyen d'un procédé de dépôt à sec, notamment au moyen d'un procédé de dépôt chimique ou physique en phase gazeuse.

4. Procédé selon l'une quelconque des revendications précédentes, dans lequel, à l'étape (b), un matériau précurseur chimique du matériau de revêtement (17) est utilisé en tant que matériau de départ pour le matériau de revêtement (17), qui subit une réaction chimique pendant ou après le revêtement pour former le matériau de revêtement (17).

5. Procédé selon l'une quelconque des revendications précédentes, dans lequel la poudre (10) à l'étape (a) présente un diamètre de particule moyen d'au plus 1 µm, de préférence un diamètre de particule moyen dans la plage allant de 0,1 à 0,6 µm, de manière particulièrement préférée dans la plage allant de 0,2 à 0,4 µm.

6. Procédé selon l'une quelconque des revendications précédentes, dans lequel une épaisseur de couche moyenne du revêtement (16) formée à l'étape (b) est d'au plus 100 nm, notamment se situe dans la plage allant de 1 à 10 nm, de préférence dans la plage allant de 2 à 5 nm.

7. Procédé selon l'une quelconque des revendications précédentes, dans lequel le matériau magnétique (12) est un métal ferromagnétique ou un alliage métallique ferromagnétique, notamment choisi parmi les alliages de type SE-TM-B ou SE-TM, SE étant un élément des terres rares, TM étant un métal de transition du groupe du fer, et B étant le bore.

8. Aimant permanent (20), pouvant être fabriqué par un procédé selon les revendications 1 à 7, comprenant des noyaux (15) d'un matériau magnétique permanent (12) ayant un diamètre de particule moyen d'au plus 3 µm et une matrice (21) d'un matériau diamagnétique ou paramagnétique (22), dans laquelle les noyaux (15) sont incorporés, le matériau de matrice (22) étant un verre, une vitrocéramique, une céramique ou un verre métallique, et le verre ou la vitrocéramique étant à base de SiO₂ et d'autres oxydes métalliques, comprenant Al₂O₃, Na₂O, K₂O, MgO, CaO, B₂O₃, TiO₂, PbO et/ou P₂O₅ ; la céramique comprenant des matériaux de silicates minéraux, des céramiques oxydiques et des matériaux non oxydiques ; et le verre métallique comprenant un alliage métallique amorphe.

9. Machine électrique comprenant au moins un aimant permanent (20) selon la revendication 8.
